# EUROPEAN PATENT APPLICATION

(11) **EP 3 539 702 A1**
(43) Date of publication of application: **18.09.2019**
(21) Application number: 18161690.5
(22) Date of filing: 14.03.2018
(51) Int. Cl.: B23H 1/02

(54) **CURRENT CONTROL DEVICE FOR AN ELECTRICAL DISCHARGE MACHINE**

(71) Applicant: Ocean Technologies Co., Ltd., 413 Taichung City (TW)
(72) Inventor: Wong, Hung-Chih, 406 Taichung City (TW); Hsia, Pen-Chiang, 542 Caotun Township, Nantou County (TW)
(74) Representative: V.O.

(57) **Abstract**

A current control device is used in an electrical discharge machine. The electrical discharge machine is used to machine a workpiece (9), and includes an electrode (8) and a power supply (2). One of the electrode (8) and the workpiece (9) is coupled to a first terminal of the power supply (2). The current control device includes: a first terminal (61) used to be coupled to the other one of the electrode (8) and the workpiece (9) ; a second terminal (62) used to be coupled to a second terminal of the power supply (2); a resistor (R41) and a switch (Q31) coupled in series between the first and second terminals (61, 62) of the current control device; and a current compensating circuit (41) coupled to the resistor (R41) in parallel, or coupled between the first and second terminals (61, 62) of the current control device.

## Description

The disclosure relates to current control, and more particularly to a current control device for an electrical discharge machine.

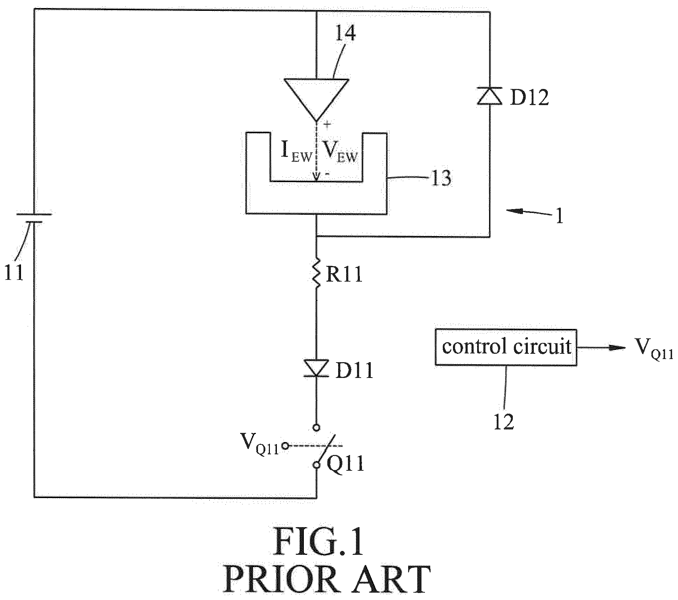

Referring to Fig. 1, a conventional current control device 1 is used in an electrical discharge machine. The electrical discharge machine is used to machine a workpiece 13, and includes a power supply 11 and an electrode 14. The power supply 11 has a positive terminal and a negative terminal. The electrode 14 is coupled to the positive terminal of the power supply 11.

The conventional current control device 1 includes a resistor (R11), two diodes (D11, D12), a switch (Q11) and a control circuit 12. The resistor (R11) has a first terminal that is coupled to the workpiece 13, and a second terminal. The diode (D11) has an anode that is coupled to the second terminal of the resistor (R11), and a cathode. The switch (Q11) is coupled between the cathode of the diode (D11) and the negative terminal of the power supply 11. The diode (D12) has an anode that is coupled to the workpiece 13, and a cathode that is coupled to the positive terminal of the power supply 11. The control circuit 12 is coupled to the switch (Q11), and generates a control signal (V_{Q11}) to control operation of the switch (Q11) between conduction and non-conduction.

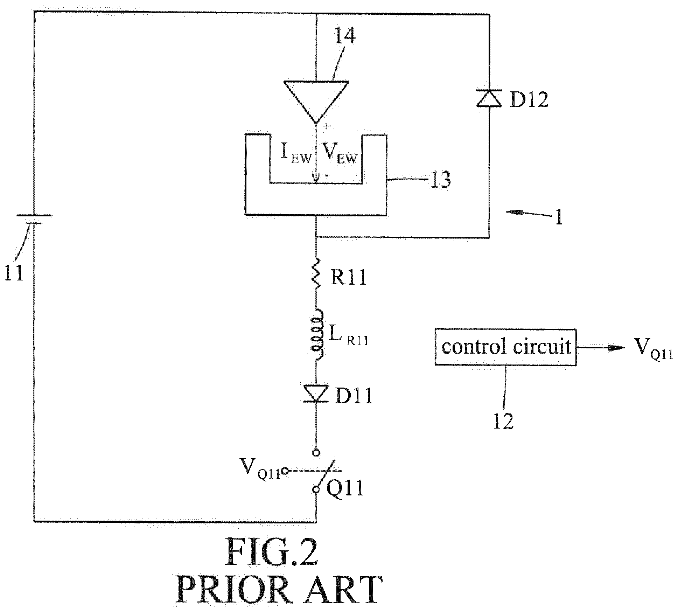

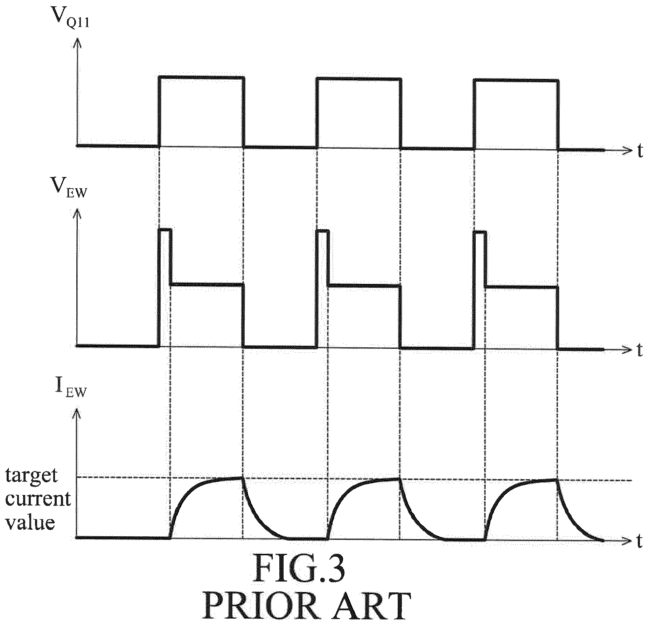

Fig. 2 illustrates an equivalent circuit of the conventional current control device 1. In Fig. 2, an imaginary inductor (L_{R11}) that is used to model a parasitic inductance of the resistor (R11) is depicted. Fig. 3 illustrates operation of the conventional current control device 1. In Fig. 3, the control signal (V_{Q11}), a gap voltage (V_{EW}) between the electrode 14 and the workpiece 13, and a working current (_{IEW}) flowing through the electrode 14 and the workpiece 13 are depicted. Referring to Figs. 2 and 3, when the control signal (V_{Q11}) shifts from a logic low level to a logic high level, the switch (Q11) conducts, and the working current (I_{EW}) is generated, increasing at a relatively slow rate due to the parasitic inductance of the resistor (R11).To ensure that the working current (I_{EW}) can increase to a target current value, the conduction time of the switch (Q11) has to be sufficiently extended, which results in relatively high consumption of the electrode 14 and relatively low machining speed. In addition, when the control signal (V_{Q11}) returns from the logic high level to the logic low level, the switch (Q11) no longer conducts, and the working current (_{IEW}) decreases slowly. Therefore, the non-conduction time of the switch (Q11) has to be sufficiently extended to ensure that the working current (I_{EW}) can decrease to zero, resulting in relatively low machining speed.

Therefore, an object of the disclosure is to provide a current control device that can alleviate at least one of the drawbacks of the prior art.

According to the disclosure, the current control device is used in an electrical discharge machine. The electrical discharge machine is used to machine a workpiece, and includes an electrode and a power supply that has a first terminal and a second terminal. One of the electrode and the workpiece is coupled to the first terminal of the power supply. The current control device includes a first terminal, a second terminal, a resistor, a switch and a current compensating circuit. The first terminal of the current control device is used to be coupled to the other one of the electrode and the workpiece. The second terminal of the current control device is used to be coupled to the second terminal of the power supply. The resistor and the switch are coupled in series between the first and second terminals of the current control device. The current compensating circuit is coupled to the resistor in parallel, or is coupled between the first and second terminals of the current control device. The current compensating circuit is operable to induce a current that flows therethrough.

Other features and advantages of the disclosure will become apparent in the following detailed description of the embodiments with reference to the accompanying drawings, of which:
Fig. 1 is a circuit block diagram illustrating a conventional current control device;
Fig. 2 is a circuit block diagram illustrating an equivalent circuit of the conventional current control device;
Fig. 3 is a timing diagram illustrating operation of the conventional current control device;
Fig. 4 is a circuit block diagram illustrating a first embodiment of a current control device according to the disclosure;
Fig. 5 is a circuit block diagram illustrating an equivalent circuit of the first embodiment;
Fig. 6 is a timing diagram illustrating operation of the first embodiment;
Fig. 7 is a circuit block diagram illustrating a second embodiment of the current control device according to the disclosure;
Fig. 8 is a circuit block diagram illustrating a third embodiment of the current control device according to the disclosure;
Fig. 9 is a circuit block diagram illustrating a fourth embodiment of the current control device according to the disclosure; and
Fig. 10 is a timing diagram illustrating operation of the fourth embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

Moreover, it should be noted that throughout the disclosure, when two elements are described as being "coupled in series, " "connected in series" or the like, it is merely intended to portray a serial connection between the two elements without necessarily implying that the currents flowing through the two elements are identical to each other and without limiting whether or not an additional element is coupled to a common node between the two elements. Essentially, "a series connection of elements, " "a series coupling of elements" or the like as used throughout the disclosure should be interpreted as being such when looking at those elements alone.

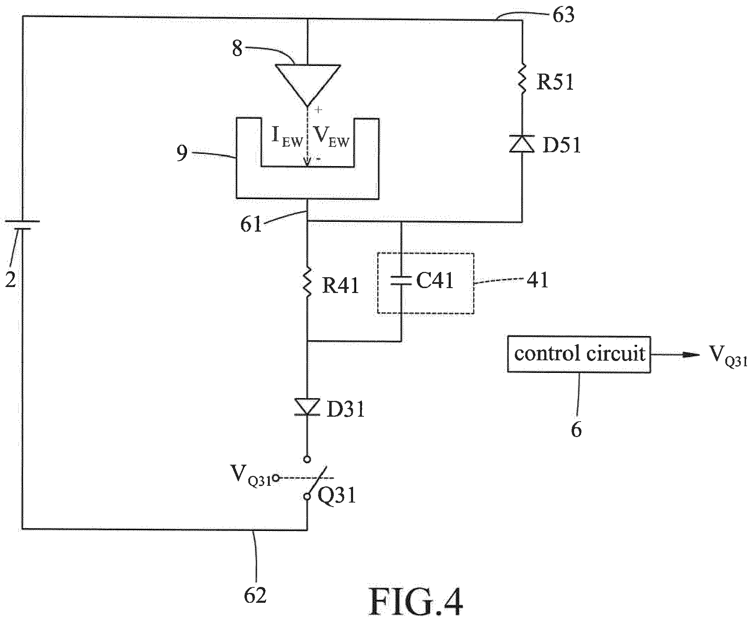

Referring to Fig. 4, a first embodiment of a current control device according to the disclosure is used in an electrical discharge machine. The electrical discharge machine is used to machine a workpiece 9, and includes a power supply 2 and an electrode 8. The power supply 2 has a first terminal (which is a positive terminal in this embodiment) and a second terminal (which is a negative terminal in this embodiment). One of the electrode 8 and the workpiece 9 is coupled to the first terminal of the power supply 2. In this embodiment, the electrode 8 is coupled to the first terminal of the power supply 2.

The current control device of this embodiment includes a first terminal 61, a second terminal 62, a third terminal 63, a first resistor (R41), a first diode (D31), a first switch (Q31), a second diode (D51), a second resistor (R51), a current compensating circuit 41 and a control circuit 6.

The first terminal 61 is used to be coupled to the other one of the electrode 8 and the workpiece 9. In this embodiment, the first terminal 61 is coupled to the workpiece 9. The second terminal 62 is used to be coupled to the second terminal of the power supply 2. The third terminal 63 is used to be coupled to the first terminal of the power supply 2.

The first resistor (R41), the first diode (D31) and the first switch (Q31) are coupled in series between the first and second terminals 61, 62. In this embodiment, the first resistor (R41) has a first terminal that is coupled to the first terminal 61, and a second terminal, the first diode (D31) has an anode that is coupled to the second terminal of the first resistor (R41), and a cathode, and the first switch (Q31) is coupled between the cathode of the first diode (D31) and the second terminal 62.

The second diode (D51) and the second resistor (R51) are coupled in series between the first and third terminals 61, 63. In this embodiment, the second diode (D51) has an anode that is coupled to the first terminal 61, and a cathode, and the second resistor (R51) is coupled between the cathode of the second diode (D51) and the third terminal 63.

The current compensating circuit 41 is coupled to the first resistor (R41) inparallel. In this embodiment, the current compensating circuit 41 includes a capacitor (C41) that is coupled to the first resistor (R41) in parallel.

The control circuit 6 is coupled to the first switch (Q31), and generates a control signal (V_{Q31}) to control operation of the first switch (Q31) between conduction and non-conduction

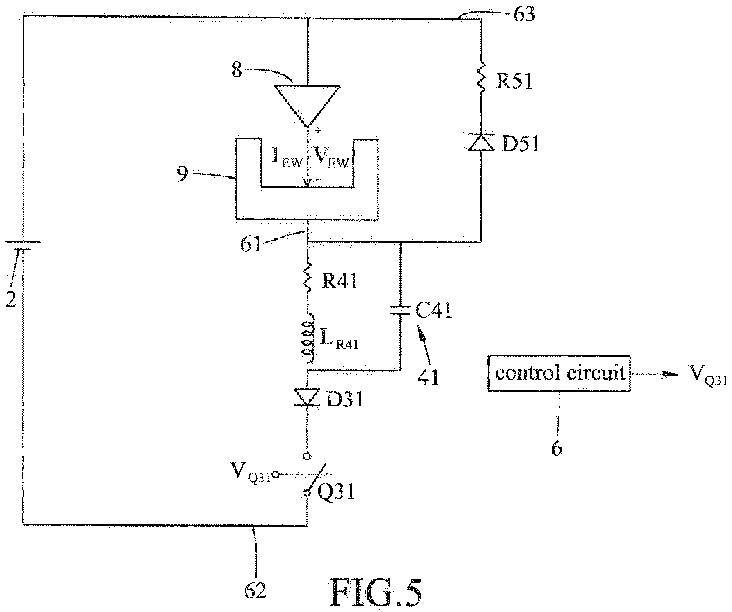

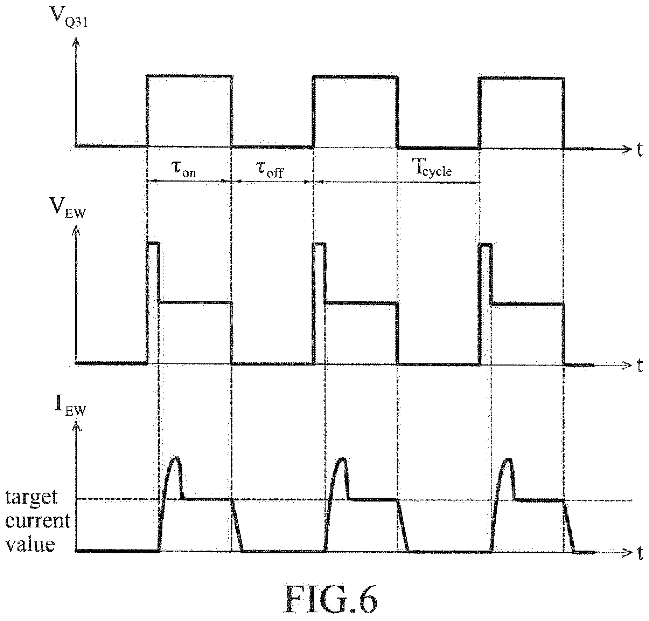

Referring to Fig. 5, an equivalent circuit of the current control device of the first embodiment depicts an imaginary inductor (L_{R41}) that is used to model a parasitic inductance of the first resistor (R41). Fig. 6 illustrates operation of the current control device of this embodiment. In Fig. 6, the control signal (V_{Q31}), a gap voltage (V_{Ew}) between the electrode 8 and the workpiece 9, and a working current (I_{EW}) flowing through the electrode 8 and the workpiece 9 are depicted. Referring to Figs. 5 and 6, the control signal (V_{Q31}) alternates at a frequency of 1/T_{cycle} between a logic high level and a logic low level, one of which (e.g., the logic high level) corresponds to the conduction of the first switch (Q31), and the other of which (e.g., the logic low level) corresponds to the non-conduction of the first switch (Q31).

When the first switch (Q₃₁) conducts, the operation of the current control device of this embodiment is as follows. Initially, the working current (I_{EW}) is not generated, and the gap voltage (V_{Ew}) equals a voltage that is supplied by the power supply 2. Thereafter, the working current (I_{EW}) is generated, and the gap voltage (V_{Ew}) drops abruptly. The working current (I_{EW}) is cooperatively constituted by a first current that is induced by the first resistor (R41), and a second current that is induced by the capacitor (C41). The first current flows through the first resistor (R41), the first diode (D31) and the conducting first switch (Q31), and increases relatively slowly from zero to a target current value (which is determined by a resistance of the first resistor (R41)) due to the parasitic inductance of the first resistor (R41). The second current flows through the capacitor (C41), the first diode (D31) and the conducting first switch (Q31), increases from zero to a peak current value (which is determined by a capacitance of the capacitor (C41)), and decreases from the peak current value to zero. As a result, the working current (I_{EW}) increases at a rate higher than that of the increase of the first current, and conduction time of τₒₙ of the first switch (Q31) (which corresponds to discharge time of the electrical discharge machine) can be shortened as compared to the conventional current control device, thereby attaining relatively low consumption of the electrode 8 for performing the same amount of machining on the workpiece 9 and relatively high machining speed. It should be noted that the capacitance of the capacitor (C41) can be set such that the working current (I_{EW}) overshoots the target current value and then returns to the target current value as shown in Fig. 6. In an example, a maximum current value of the working current (I_{EW}) set to be 1. 5 times the target current value attains relatively good machining efficiency.

When the first switch (Q31) does not conduct, the working current (I_{EW}) flows through the second diode (D51) and the second resistor (R51), and substantially linearly decreases from the target current value to zero. The second resistor (R51) can speed up the decrease of the working current (I_{EW}), and the greater a resistance of the second resistor (R51), the higher a rate of the decrease of the working current (I_{EW}). As a result, non-conduction time of τ_{off} of the first switch (Q31) (which corresponds to pause time of the electrical discharge machine) can be shortened as compared to the conventional current control device, thereby attaining relatively high machining speed.

In view of the above, by virtue of the current compensating circuit 41 that speeds up the increase of the working current (I_{EW}) when the first switch (Q31) conducts, the conduction time of the first switch (Q31) can be shortened as compared to the conventional current control device, thereby attaining relatively low consumption of the electrode 8 and relatively high machining speed. Moreover, by virtue of the second resistor (R51) that speeds up the decrease of the working current (I_{EW}) when the first switch (Q31) does not conduct, the non-conduction time of the first switch (Q31) can be shortened as compared to the conventional current control device, thereby attaining relatively high machining speed.

It should be noted that the following modifications may be made to this embodiment:
1. The anode of the first diode (D31) may be coupled to the first switch (Q31) instead of the second terminal of the first resistor (R41), the cathode of the first diode (D31) may be coupled to the second terminal of the first resistor (R41) instead of the first switch (Q31), the anode of the second diode (D51) may be coupled to the second resistor (R51) instead of the first terminal 61, and the cathode of the second diode (D51) may be coupled to the first terminal 61 instead of the second resistor (R51). When the above modifications are made in the coupling relationships, the first terminal of the power supply 2 is the negative terminal, and the second terminal of the power supply 2 is the positive terminal.
2. At least one other combination of the elements (R41, 41, D31, Q31) may be coupled between the first and second terminals 61, 62. When such other combination is provided and coupled in the manner describe above, the first resistors (R41) of the combinations may have different resistances (thereby defining different target current values for satisfying different machining requirements of the electrical discharge machine), and the control circuit 6 may control the first switches (Q31) of the combinations in such a way that the first switch (Q31) of one of the combinations which is adapted in the electrical discharge machine to fulfill a selected machining requirement periodically alternates between conduction and non-conduction, while the first switch(es) (Q31) of the remaining combination (s) (which is (are) adapted in the electrical discharge machine to fulfill a different machining requirement(s)) does(do) not conduct. In other words, only one combination is activated at a time for the electrical discharge machine to perform under a desired one of the machining requirements.
3. The first diode (D31) may be omitted. In the case where the first diode (D31) is omitted, the first switch (Q31) is coupled to the second terminal of the first resistor (R41).
4. The second resistor (R51) may be omitted. In the case where the second resistor (R51) is omitted, the cathode of the second diode (D51) is coupled to the third terminal 63, and the working current (I_{EW}) decreases relatively slowly and substantially exponentially as does the conventional current control device.

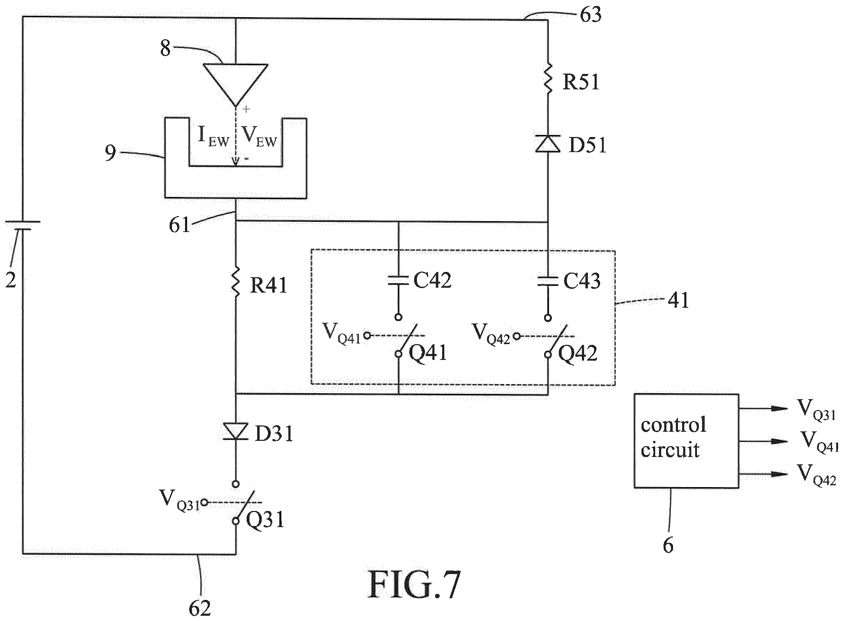

Referring to Fig. 7, a second embodiment of the current control device according to the disclosure is a modification of the first embodiment, and differs from the first embodiment in the current compensating circuit 41 and in the control circuit 6.

In the second embodiment, the current compensating circuit 41 includes a plurality of (e. g. , two) capacitors (C42, C43), andapluralityof (e.g., two) second switches (Q41, Q42) that are respectively coupled to the capacitors (C42, C43) in series. Each series connection of the capacitor (C42, C43) and the second switch (Q41, Q42) is coupled to the first resistor (R41) in parallel. The control circuit 6 is coupled further to the second switches (Q41, Q42), and generates control signals (V_{Q41}, V_{Q42}) to respectively control operation of the second switches (Q41, Q42) between conduction and non-conduction. In an example, the control circuit 6 controls the second switches (Q41, Q42) in such a way that at least one of the second switches (Q41, Q42) conducts at any given time, and that a capacitance (equivalent capacitance) provided by the current compensating circuit 41 makes the electrical discharge machine fulfill a selected machining requirement.

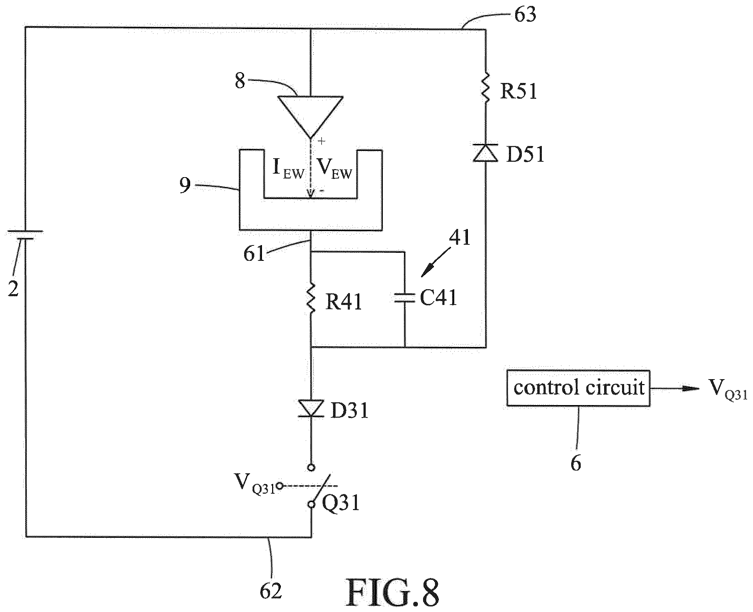

Referring to Fig. 8, a third embodiment of the current control device according to the disclosure is a modification of the first embodiment, and differs from the first embodiment in that the second diode (D51) and the second resistor (R51) are coupled in series between the second terminal of the first resistor (R41) and the third terminal 63, instead of between the first and third terminals 61, 63. In this embodiment, the anode of the second diode (D51) is coupled to the second terminal of the first resistor (R41), and the second resistor (R51) is coupled between the cathode of the second diode (D51) and the third terminal 63.

In the third embodiment, when the first switch (Q31) does not conduct, the working current (I_{EW}) flows through the parallel connection of the first resistor (R41) and the current compensating circuit 41, the second diode (D51) and the second resistor (R51), and substantially linearly decreases from the target current value to zero. The first and second resistors (R41, R51) can speed up the decrease of the working current (I_{EW}), and the greater a sum of the resistances of the first and second resistors (R41, R51), the higher the rate of the decrease of the working current (I_{EW}).

It should be noted that, the following modifications may be made to the third embodiment:
1. At least one other combination of the elements (R41, 41, D31, Q31, D51) may be coupled among the first and second terminals 61, 62 and the second resistor (R51) . In the case where such other combination is provided and coupled in the manner describe above, the first resistors (R41) of the combinations may have different resistances (thereby defining different target current values for satisfying different machining requirements of the electrical discharge machine), and the control circuit 6 may control the first switches (Q31) of the combinations in such a way that the first switch (Q31) of one of the combinations which is adapted in the electrical discharge machine to fulfill a selected machining requirement periodically alternates between conduction and non-conduction, while the first switch(es) (Q31) of the remaining combination(s) which is (are) adapted in the electrical discharge machine to fulfill a different machining requirement (s) does(do) not conduct.
2. The second resistor (R51) may be omitted. In the case where omission of the second resistor (R51) is realized, the cathode of the second diode (D51) is coupled to the third terminal 63, and the working current (I_{EW}) still decreases relatively fast and substantially linearly as compared to the conventional current control device.
3. The current compensating circuit 41 may have a configuration as shown in Fig. 7.

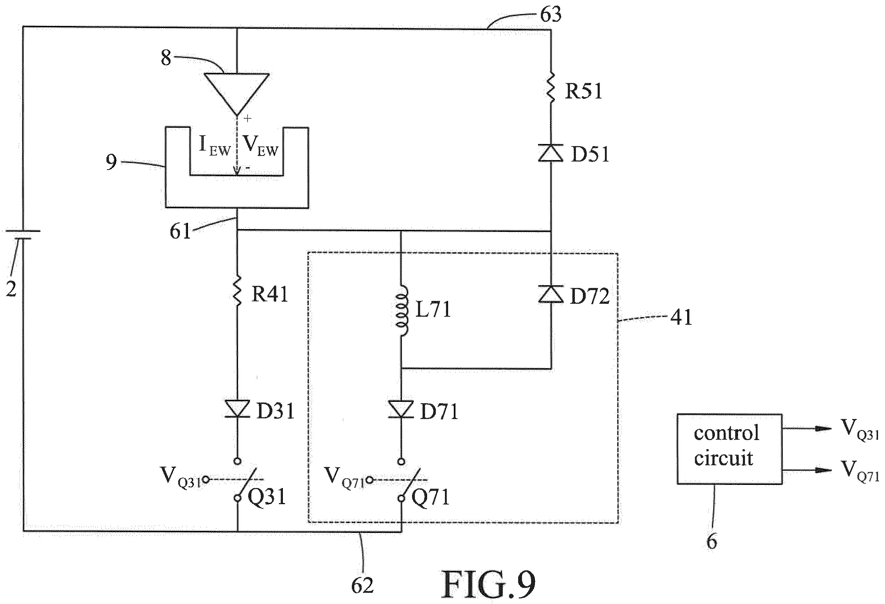

Referring to Fig. 9, a fourth embodiment of the current control device according to the disclosure is a modification of the first embodiment, and differs from the first embodiment in the current compensating circuit 41 and in the control circuit 6.

In the fourth embodiment, the current compensating circuit 41 includes an inductor (L71), a third diode (D71), a second switch (Q71) and a fourth diode (D72). The inductor (L71), the third diode (D71) and the second switch (Q71) are coupled in series between the first and second terminals 61, 62. In this embodiment, the inductor (L71) has a first terminal that is coupled to the first terminal 61 and a second terminal, the third diode (D71) has an anode that is coupled to the second terminal of the inductor (L71) and a cathode, the second switch (Q71) is coupled between the cathode of the third diode (D71) and the second terminal 62, and the fourth diode (D71) is coupled to the inductor (L71) in parallel, with its anode coupled to the second terminal of the inductor (L71) and its cathode coupled to the first terminal of the inductor (L71). The control circuit 6 is coupled further to the second switch (Q71), and generates a control signal (V_{Q71}) to control operation of the second switch (Q71) between conduction and non-conduction.

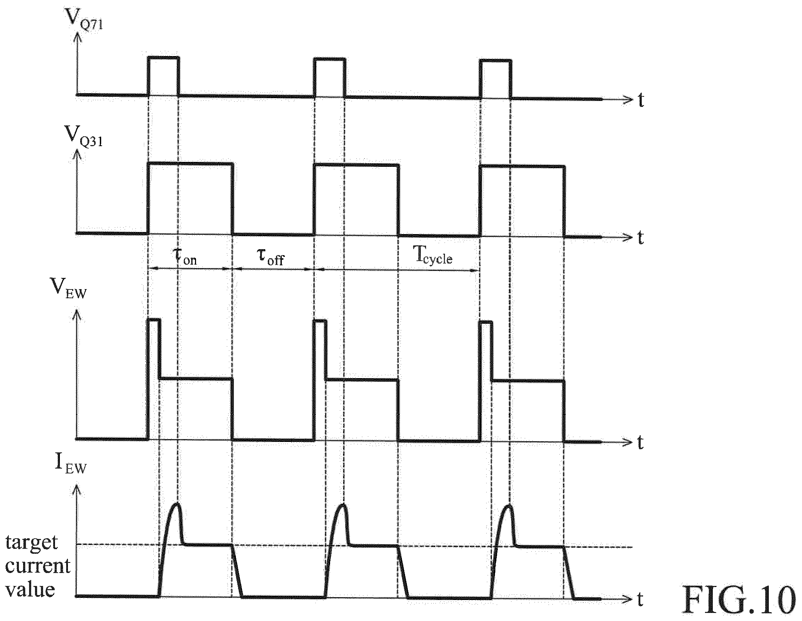

Fig. 10 illustrates operation of the current control device of this embodiment. In Fig. 10, the control signals (V_{Q31}, V_{Q71}), the gap voltage (V_{EW}) and the working current (I_{EW}) are depicted. Referring to Figs. 9 and 10, the control signal (V_{Q71}), like the control signal (V_{Q31}), alternates at the frequency of 1/T_{cycle} between the logic high level and the logic low level, one of which (e.g., the logic high level) corresponds to the conduction of the second switch (Q71), and the other of which (e.g., the logic low level) corresponds to the non-conduction of the second switch (Q71). In addition, the control signals (V_{Q31}, V_{Q71}) transitions to the logic high level simultaneously, and the control signal (V_{Q31}) transitions to the logic low level after the control signal (V_{Q71}) transitions to the logic low level.

When the first switch (Q₃₁) conducts, the operation of the current control device of this embodiment is as follows. Initially, the working current (I_{EW}) is not generated, and the gap voltage (V_{EW}) equals the voltage that is supplied by the power supply 2. Thereafter, the working current (I_{EW}) is generated, and the gap voltage (V_{EW}) drops abruptly. The working current (I_{EW}) is cooperatively constituted by a first current that is induced by the first resistor (R41) and a second current that is induced by the inductor (L71) before the second switch (Q71) becomes non-conducting, and is solely constituted by the first current after the second switch (Q71) becomes non-conducting. The first current flows through the first resistor (R41), the first diode (D31) and the conducting first switch (Q31), and increases relatively slowly from zero to the target current value due to the parasitic inductance of the first resistor (R41). Before the second switch (Q71) becomes non-conducting, the second current flows through the inductor (L71), the third diode (D71) and the conducting second switch (Q71), and increases from zero to a peak current value that is determined by an inductance of the inductor (L71) and conduction time of the second switch (Q71). After the second switch (Q71) becomes non-conducting, the second current flows through the inductor (L71) and the fourth diode (D72), and decreases from the peak current value to zero. As a result, the working current (I_{EW}) increases at a rate greater than that of the increase of the first current, and the conduction time of τₒₙ the first switch (Q31) can be shortened as compared to the conventional current control device, thereby attaining relatively low consumption of the electrode 8 and relatively high machining speed. It should be noted that the inductance of the inductor (L71) and the conduction time of the second switch (Q71) can be set such that the working current (I_{EW}) overshoots the target current value and then returns to the target current value as shown in Fig. 10.

It should be noted that, the following modifications may be made to this embodiment:
1. The anode of the first diode (D31) may be coupled to the first switch (Q31) instead of the second terminal of the first resistor (R41), the cathode of the first diode (D31) may be coupled to the second terminal of the first resistor (R41) instead of the first switch (Q31), the anode of the second diode (D51) may be coupled to the second resistor (R51) instead of the first terminal 61, the cathode of the second diode (D51) may be coupled to the first terminal 61 instead of the second resistor (R51), the anode of the third diode (D71) may be coupled to the second switch (Q71) instead of the second terminal of the inductor (L71), the cathode of the third diode (D71) may be coupled to the second terminal of the inductor (L71) instead of the second switch (Q71), the anode of the fourth diode (D72) may be coupled to the first terminal of the inductor (L71) instead of the second terminal of the inductor (L71), and the cathode of the fourth diode (D72) may be coupled to the second terminal of the inductor (L71) instead of the first terminal of the inductor (L71). In the case where the above modifications are made in the coupling relationships, the first terminal of the power supply 2 is the negative terminal, and the second terminal of the power supply 2 is the positive terminal.
2. At least one other combination of the elements (R41, D31, Q31) may be coupled between the first and second terminals 61, 62. In the case where such other combination is provided and coupled in the manner describe above, the first resistors (R41) of the combinations may have different resistances (thereby defining different target current values for satisfying different machining requirements of the electrical discharge machine), and the control circuit 6 may control the first switches (Q31) of the combinations in such a way that the first switch (Q31) of one of the combinations which is adapted in the electrical discharge machine to fulfill a selected machining requirement periodically alternates between conduction and non-conduction, while the first switch(es) (Q31) of the remaining combination(s) which is(are) adapted in the electrical discharge machine to fulfill a different machining requirement(s) does(do) not conduct.
3. The third diode (D71) may be omitted. In the case where the third diode (D71) is omitted, the second switch (Q71) is coupled to the second terminal of the inductor (L71).

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

While the disclosure has been described in connection with what are considered the exemplary embodiments, it is understood that the disclosure is not limited to the disclosed embodiments but is intended to cover various arrangements included within the spirit and scope of the broadest interpretation so as to encompass all such modifications and equivalent arrangements.

## Claims

1. A current control device used in an electrical discharge machine, the electrical discharge machine being used to machine a workpiece (9), and including an electrode (8) and a power supply (2) that has a first terminal and a second terminal, one of the electrode (8) and the workpiece (9) being coupled to the first terminal of the power supply, said current control device being **characterized by**:
a first terminal (61) used to be coupled to the other one of the electrode (8) and the workpiece (9);
a second terminal (62) used to be coupled to the second terminal of the power supply (2);
a first resistor (R41) and a first switch (Q31) coupled in series between said first and second terminals (61, 62) of said current control device; and
a current compensating circuit (41) coupled to said first resistor (R41) in parallel, or coupled between said first and second terminals (61, 62) of said current control device, said current compensating circuit (41) being operable to induce a current that flows therethrough.

2. The current control device of claim 1, further **characterized by** a first diode (D31) that is coupled in series with said first resistor (R41) and said first switch (Q31) between said first and second terminals (61, 62) of said current control device.

3. The current control device of any of claims 1 and 2, further **characterized by**:
a third terminal (63) used to be coupled to the first terminal of the power supply (2); and
a second diode (D51) coupled between said first and third terminals (61, 63) of said current control device.

4. The current control device of claim 3, further **characterized by** a second resistor (R51) that is coupled in series with said second diode (D51) between said first and third terminals (61, 63) of said current control device.

5. The current control device of any of claims 1 and 2, **characterized in that**:
said first resistor (R41) has a first terminal which is coupled to said first terminal (61) of said current control device, and a second terminal; and
said current control device being further **characterized by**:
a third terminal (63) used to be coupled to the first terminal of the power supply (2), and
a second diode (D51) coupled between said second terminal of said first resistor (R41) and said third terminal (63) of said current control device.

6. The current control device of claim 5, further **characterized by** a second resistor (R51) that is coupled in series with said second diode (D51) between said second terminal of said first resistor (R41) and said third terminal (63) of said current control device.

7. The current control device of any of claims 1 to 6, **characterized in that** said current compensating circuit (41) includes a capacitor (C41) which is coupled to said first resistor (R41) in parallel.

8. The current control device of any of claims 1 to 6, **characterized in that**:
said current compensating circuit (41) includes a plurality of capacitors (C42, C43), and a plurality of second switches (Q41, Q42) which are respectively coupled to said capacitors (C42, C43) in series; and
each series connection of said capacitor (C42, C43) and said second switch (Q41, Q42) is coupled to said first resistor (R41) in parallel.

9. The current control device of any of claims 1 to 4, **characterized in that** said current compensating circuit (41) includes an inductor (L71) and a second switch (Q71) which are coupled in series between said first and second terminals (61, 62) of said current control device.

10. The current control device of claim 9, **characterized in that** said current compensating circuit (41) further includes a third diode (D71) which is coupled in series with said inductor (L71) and said second switch (Q71) between said first and second terminals (61, 62) of said current control device.

11. The current control device of any of claims 9 and 10, **characterized in that** said current compensating circuit (41) further includes a fourth diode (D72) which is coupled to said inductor (L71) in parallel.

12. The current control device of any of claims 9 to 11, further **characterized by** a control circuit (6) that is coupled to said first and second switches (Q31, Q71);
said control circuit (6) controlling said first and second switches (Q31, Q71) in such a way that said first and second switches (Q31, Q71) become conducting simultaneously, and that said first switch (Q31) becomes non-conducting after said second switch (Q71) becomes non-conducting.
